(19) Europäisches Patentamt

European Patent Office

Office européen des brevets

(11) **EP 1 505 659 A1**

(12) **EUROPEAN PATENT APPLICATION**
published in accordance with Art. 158(3) EPC

(43) Date of publication:
09.02.2005 Bulletin 2005/06

(51) Int Cl.7: **H01L 31/04**

(21) Application number: 03721100.0

(86) International application number:
**PCT/JP2003/005939**

(22) Date of filing: 13.05.2003

(87) International publication number:
**WO 2003/100867 (04.12.2003 Gazette 2003/49)**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **14.05.2002 JP 2002138211**

(71) Applicant: **Sony Corporation Tokyo 141-0001 (JP)**

(72) Inventors:
• **ENOMOTO, Masashi, c/o SONY CORPORATION Tokyo 141-0001 (JP)**
• **HONDA, Toshio, c/o SONY CORPORATION Tokyo 141-0001 (JP)**

(74) Representative: **Smith, Samuel Leonard J.A. Kemp & Co., 14 South Square, Gray's Inn London WC1R 5JJ (GB)**

(54) **POWER SOURCE DEVICE**

(57) A power supply unit composed so that outputs from a plurality of cells having different output characteristics are output from common terminals and so that a decrease in energy efficiency caused by connecting the cells is suppressed to the utmost is provided. After outputs of a plurality of cells 10a to 10c having different output voltages and output currents are adjusted to have the same output voltage value, the outputs are output to terminals 4 and 5 so as to match the parallel connection. Since the outputs of the cells are output in parallel, a cell outputting a low current does not restrict the output currents in the overall power supply unit, unlike the series connection. Moreover, since the outputs, which are adjusted to have the same voltage, are connected, problems such as flowback do not occur. In the case where the present invention is applied to a tandem solar cell, a light-absorbing wavelength characteristic can be assigned to each tandem photoelectric transducer so that solar light is utilized at the maximum efficiency, and the photoelectric energy conversion efficiency does not decrease even when the wavelength distribution of solar light deviates from the standard one.

FIG. 1

**EP 1 505 659 A1**

**Description**

Technical Field

The present invention relates to power supply units including cells, for example, solar cells (photoelectric transducers) and chemical cells.

Background Art

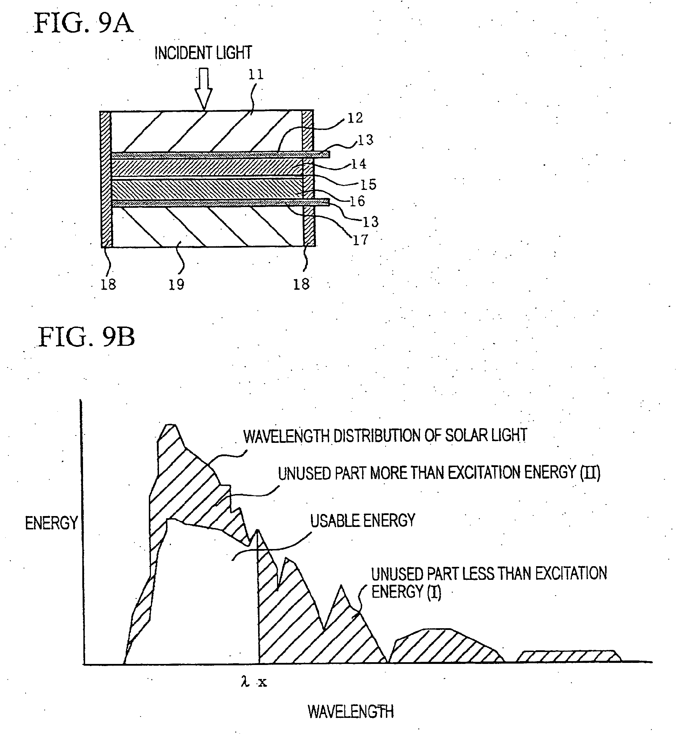

Solar cells utilizing solar light have been regarded as energy sources to replace fossil fuels. A variety of studies have been done. A solar cell is a type of photoelectric transducer for converting light energy into electrical energy.
In the current most popular solar cells using the pn junction of semiconductors or a heterojunction of dissimilar materials, among photons entering, for example, a pn junction, those photons that have energy larger than band-gap energy of a semiconductor are absorbed. Thereby, electrons in the valence band are excited into the conduction band, and holes are simultaneously generated in the valence band. Electron-hole pairs are generated in a semiconductor in this way, and an internal electric field created in the pn junction causes the electrons to move toward the n-type semiconductor layer and the holes to move toward the p-type semiconductor layer, thereby generating electromotive force.
On the other hand, a wet solar cell making use of photoinduced electron transfer is known as a solar cell based on a new principle. Fig. 9A is a schematic sectional view of a typical wet solar cell. The wet solar cell mainly includes a transparent substrate 11 composed of, e.g., glass, a transparent electrode 12 of, e.g., indium tin oxide (ITO), a semiconductor layer 14 of, e.g., titanium dioxide ($TiO_2$), a counter electrode 17, an electrolyte layer 16 retained between the semiconductor layer 14 and the counter electrode 17, and a substrate 19. In addition, a light-absorbing member 15 composed of, e.g., ruthenium complex photosensitizing dye is applied to a surface of the semiconductor layer 14 toward the electrolyte layer 16; the light-absorbing member 15 has an absorption spectrum in the visible-light region.
When light enters the device shown in Fig. 9A, the device functions as a cell including the counter electrode 17 as a positive electrode and the transparent electrode 12 as a negative electrode. The principle of the cell will now be described.
When the light-absorbing member 15 absorbs photons entering the semiconductor layer 14, electrons in a ground state in the light-absorbing member 15 are excited into an excited state. Since electrical coupling by, for example, a carboxyl group occurs between the light-absorbing member 15 and the semiconductor layer 14, the electrons in an excited state move to the conduction band of the semiconductor layer 14 and reach the transparent electrode 12 through the semiconductor layer 14.
In contrast, positive ions generated by the loss of electrons in the light-absorbing member 15 gain electrons from negative ions in the electrolyte layer 16 and are electrically neutralized. The negative ions having lost the electrons diffuse into the counter electrode 17 and gain electrons from the counter electrode 17.
One of the most important features of all the above-described solar cells is energy conversion efficiency when light energy is converted into electrical energy. There are significant problems in improving the energy conversion efficiency.
Energy possessed by one photon is proportional to the frequency of light or is inversely proportional to the wavelength of light. Ordinary light, for example, solar light includes a wide range of light components having different wavelengths, and thus consists of photons having different energies.
Electrons in a substance inevitably have only a few energy states inherent in the substance, which are quantum-mechanically determined. Thus, the energy difference between electrons in a ground state and those in an excited state, i.e., the energy required for exciting the electrons in a ground state into an excited state, has a fixed value inherent in the substance. Hereinafter, this energy is referred to as excitation energy Ex, and the wavelength of a photon having the same energy is denoted as λx.
In a solar cell using a pn junction, the energy difference between the valence band (ground state) and the conduction band (excited state), i.e., the band-gap energy, is the excitation energy Ex. In a wet solar cell, the energy difference between a ground state and an excited state in a light-absorbing member is the excitation energy Ex.

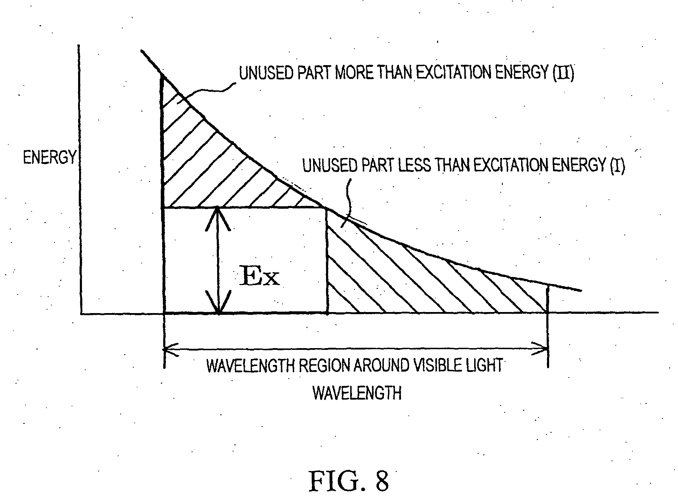

Fig. 8 is a graph illustrating the rate of light energy converted into electrical energy when light uniformly including all light components having wavelengths around visible light enters a solar cell.
The light components having wavelengths that are longer than λx and having photon energies that are less than the excitation energy Ex cannot excite electrons and are not absorbed. Thus, the energies of these light components are not converted into electrical energy. That is, the energies of the light components having wavelengths longer than λx cannot be used and are thus wasted, as shown in a shaded area (I) of Fig. 8.
Even when the light components having wavelengths that are shorter than λx and having photon energies that are larger than the excitation energy Ex are absorbed, the energy gained by the electrons does not exceed Ex.

That is, even when the electrons are excited with the light components having higher energies exceeding Ex, the parts of these energies that exceed Ex are converted into thermal energy and are wasted, as shown in a shaded area (II) of Fig. 8.

When Ex is reduced, the waste represented by the shaded area (II) is increased while the waste represented by the shaded area (I) is decreased. When Ex is increased, the waste represented by the shaded area (I) is increased while the waste represented by the shaded area (II) is decreased. In this way, unavailable energies represented by the shaded area (I) and those represented by the shaded area (II) are in a trade-off relationship in that decreasing one unusable energy increases the other, and vice versa.

Fig. 9B is a graph illustrating the rate of solar light energy converted into electrical energy by the wet solar cell shown in Fig. 9A. The light from the sun to the earth has a wavelength distribution shown in Fig. 9B. In a solar cell using a single type of light-absorbing substance, even when the excitation energy Ex is set so that the sum of the energies that are less than the excitation energy and are wasted and the energies that exceed the excitation energy and are wasted is minimized, the maximum energy conversion efficiency does not exceed about 33 percent due to the above trade-off relationship.

Tandem solar cells including a plurality of photoelectric transducers having different light-absorbing wavelength characteristics, i.e., different Ex values, have been proposed to overcome the above trade-off relationship for achieving a higher energy conversion efficiency. The photoelectric transducers are stacked along the transmission direction of light. Such tandem solar cells are disclosed in, for example, Japanese Unexamined Patent Application Publication Nos. 11-273753, 2000-90989, and 2000-100483. Hereinafter, each of the photoelectric transducers stacked in a tandem solar cell is referred to as a tandem photoelectric transducer.

In the tandem solar cell, light components having certain wavelengths that cannot be absorbed by a tandem photoelectric transducer at the previous stage can be absorbed by a tandem photoelectric transducer at the next stage. Thus, light absorption efficiency can be improved, resulting in a higher energy conversion efficiency.

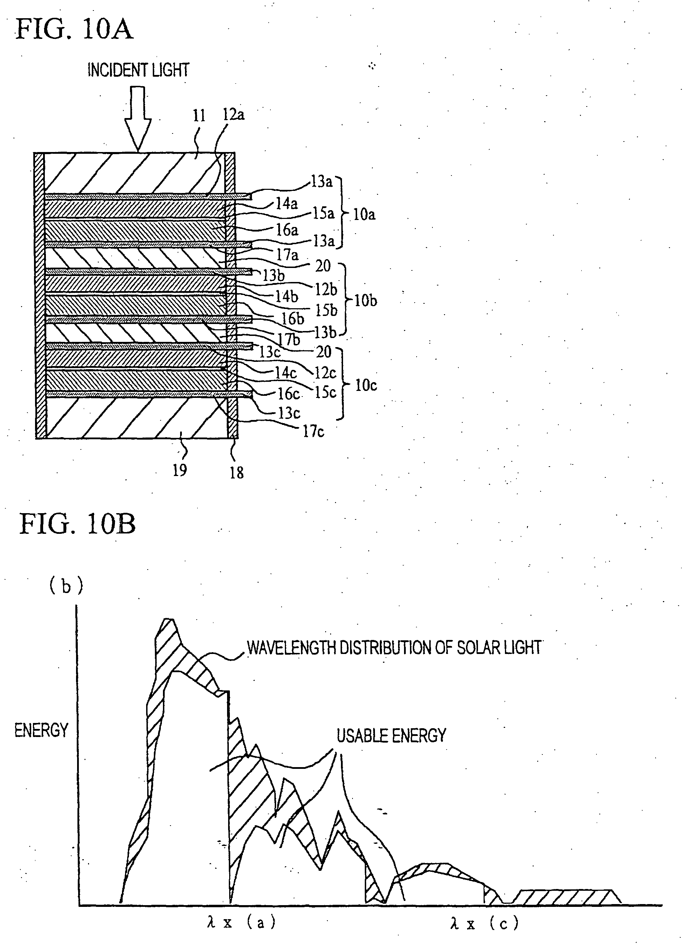

Fig. 10A is a schematic sectional view of a typical tandem wet solar cell 10. Tandem photoelectric transducers 10a, 10b, and 10c are stacked in this order from the position closest to the incident light.

Each tandem photoelectric transducer has substantially the same structure as the single-layered wet solar cell shown in Fig. 9A. The tandem photoelectric transducer 10a includes, for example, a glass substrate 11, a transparent electrode 12a, a semiconductor layer 14a, a light-absorbing member 15a, an electrolyte layer 16a, a counter electrode 17a, and a spacer 20 corresponding to the substrate 19. The counter electrode 17a, the spacer 20, and the like are composed of transparent materials and have structures that easily transmit light so that light components that are not absorbed by the light-absorbing member 15a can pass through to the next tandem photoelectric transducer.

To photoelectrically convert light components having wavelengths in a wide range at a high conversion efficiency, the absorption wavelengths of the light-absorbing members 15a to 15c are preferably different from each other. The more distant from the incident light the layer of the light-absorbing member is, the more easily the light-absorbing member preferably absorbs light components having longer wavelengths.

For example, an anthraquinone yellow dye is used as the light-absorbing member 15a, an anthraquinone magenta dye is used as the light-absorbing member 15b, and an anthraquinone cyan dye is used as the light-absorbing member 15c.

The semiconductor layers 14a to 14c are preferably optimized according to the light-absorbing members 15a to 15c so that excitation energy absorbed by electrons in the light-absorbing members is effectively utilized as much as possible, and conserved as electron energy in conduction bands of the semiconductor layers, the conserved energy being output as an electromotive force of a cell. That is, each of the light-absorbing members 15a to 15c is matched with a semiconductor having a band-gap energy that is as close as possible to the excitation energy of each of the light-absorbing members.

For example, a light-absorbing member that absorbs light components having short wavelengths and has large excitation energy is matched with zirconium dioxide ($ZrO_2$) in place of titanium dioxide ($TiO_2$). A light-absorbing member that absorbs light components having long wavelengths and has small excitation energy is matched with tin dioxide ($SnO_2$).

Fig. 10B is a graph illustrating the rate of solar light energy converted into electrical energy by the tandem solar cell having the above structure. In contrast to Fig. 9B, Fig. 10B shows that a tandem solar cell utilizes long wavelength components of solar light, which are not utilized by a single-layered solar cell, and improves the energy conversion efficiency of short wavelength components.

In a tandem solar cell, in most cases, electrical outputs of the stacked tandem photoelectric transducers are connected to each other in series, and each transducer is designed to absorb a different wavelength range so that the output currents from the transducers are equal to each other.

This arrangement is set up so that the output currents from the transducers are equal to each other for a standard wavelength distribution of solar light. When the wavelength distribution of solar light deviates from the standard one in, for example, the summer and the winter seasons, and during the daytime, the morning, and the evening, the output currents from the stacked transducers are greatly different from each other. When these transducers are connected in series to each other in this situation, any transducers outputting a low current due to a low level of light increases the internal resistance of the overall cell. Thus, the output currents are disadvantageously restricted.

When the tandem photoelectric transducers are connected to each other in parallel for this reason, electrical energy of the transducer outputting the maximum voltage flows back through the other transducers due to the different output voltages of the transducers, and the electrical energy is partially lost.

Another problem is that the pattern used for assigning a wavelength range to each of the tandem photoelectric transducers for equalizing the output currents from the transducers does not generally agree with that used for assigning a wavelength range to each transducer for utilizing solar light at the maximum efficiency. In the above arrangement, the series connection restricts the assignment of light-absorbing wavelength characteristic to each transducer, and prevents the solar light from being used at its maximum efficiency, which is a problem.

The present invention is intended to address the above problems. It is an object of the present invention to provide a power supply unit composed so that outputs from a plurality of cells having different output characteristic's are output from common terminals and so that a decrease in energy efficiency caused by connecting the cells is suppressed to the utmost.

Disclosure of Invention

The present invention relates to a power supply unit including a plurality of cells having different output characteristics and being disposed in parallel. Outputs of the plurality of cells are adjusted to have the same voltage, and the outputs are output from common terminals.

According to the present invention, after the outputs of the plurality of cells, having different output voltages and output currents, are adjusted to have the same output voltage value, the outputs are then output to the common terminals so as to match the parallel connection.

Since the outputs of the plurality of cells are output so as to match the parallel connection, a cell outputting a low current does not increase the internal resistance in the overall power supply unit to restrict the output currents, unlike the series connection.

Moreover, since the output voltages, which are adjusted so as to be the same, are output to the common terminals, problems such as flowback, which occurs when different output voltages are output in parallel, do not occur.

Brief Description of the Drawings

Fig. 1 is a schematic block diagram illustrating a power supply unit according to a first embodiment of the present invention.

Fig. 2 is a schematic diagram illustrating a step-up chopper-type regulating circuit, i.e., a typical voltage-regulating circuit.

Fig. 3 is a schematic block diagram illustrating a power supply unit according to a second embodiment of the present invention.

Fig. 4 is a schematic block diagram illustrating a power supply unit according to a third embodiment of the present invention.

Figs. 5A to 5C are schematic plan views illustrating wiring patterns of cell matrixes composed of small cells.

Fig. 6 is a schematic diagram illustrating a circuit for changing the number of cells connected in series in a row, suitable for the use in the third embodiment of the present invention.

Fig. 7 is a schematic diagram illustrating another circuit for changing the number of cells connected in series in a row, suitable for the use in the third embodiment of the present invention.

Fig. 8 is a graph illustrating the rate of light energy converted into electrical energy when light uniformly including light components over the entire wavelength range enters a solar cell.

Fig. 9A is a schematic sectional view of a typical wet solar cell, and Fig. 9B is a graph illustrating the rate of solar light energy converted into electrical energy by the wet solar cell.

Fig. 10A is a schematic sectional view of a typical tandem wet solar cell, and Fig. 10B is a graph illustrating the rate of solar light energy converted into electrical energy by the tandem wet solar cell.

Best Mode for Carrying Out the Invention

In the present invention, a plurality of cells are preferably connected in parallel to each other through respective voltage-regulating circuits.

Alternatively, the outputs from a plurality of cells may be stored in respective capacitors, and the stored charge in each capacitor may be output by time-sharing as a uniform voltage through a single voltage-regulating circuit that can connect to each capacitor.

Alternatively, each of a plurality of cells may include units and the number of units connected to each other in series in each of rows and the number of the rows connected to each other in parallel are adjustable.

In the present invention, these cells may be photoelectric transducers, e.g., solar cells, which are stacked along the transmission direction of light and have different optical absorption properties.

Referring to the drawings, embodiments according to the present invention will now be described specifically.

First embodiment

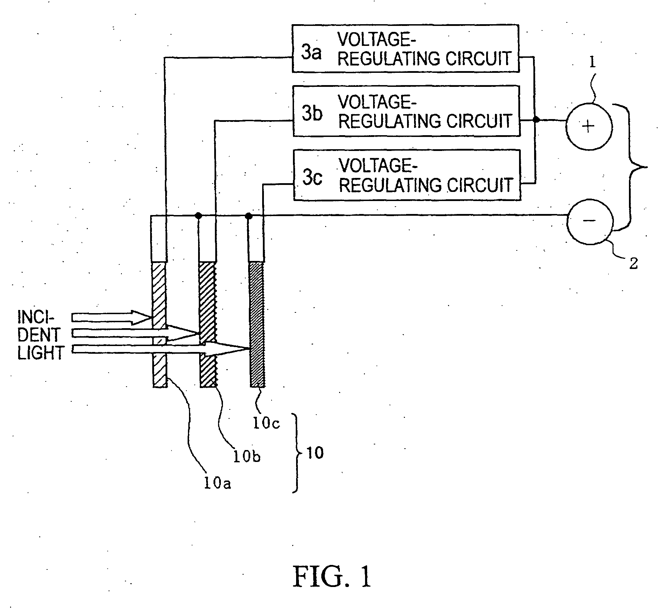

Fig. 1 is a schematic block diagram illustrating a power supply unit in which outputs of tandem photoelectric transducers 10a to 10c in a tandem wet solar cell 10 are connected in parallel to common output terminals 1 and 2 through voltage-regulating circuits 3a to 3c.

Fig. 10A is a schematic sectional view of the tandem wet solar cell 10. In the tandem wet solar cell 10, from the position closest to the incident light, the tandem photoelectric transducers 10a, 10b, and 10c are respectively retained in a first layer, a second layer; and a third layer, these layers being formed by a transparent substrate 11, two spacers 20, and another substrate 19.

The spacers 20 are composed of a transparent material and have a shape allowing light to pass through. The spacers 20 may be, for example, transparent glass plates or transparent plastic plates composed of, e.g., polyethylene terephthalate or polycarbonate. Since the substrate 19 is not required to transmit light, a nontransparent glass plate, plastic plate, ceramic plate, or metal plate may be used as the substrate 19.

The tandem photoelectric transducers 10a to 10c have the same structure. These transducers, respectively, include transparent electrodes 12a to 12c and counter electrodes 17a to 17c composed of, for example, indium tin oxide (ITO); semiconductor layers 14a to 14c composed of, for example, titanium dioxide ($TiO_2$); light-absorbing members 15a to 15c; electrolyte layers 16a to 16c; and the like.

The electrolyte layers 16a to 16c may be composed of an electrolyte solution, or a gelled or solid electrolyte. The electrolyte solution may be composed of, for example, a solution containing an iodide/triiodide ($I$-/$I_3$-) oxidation-reduction system or redox couple. Specifically, a solution containing iodine and ammonium iodide dissolved in a solvent of, for example, acetonitrile is used. Side faces of the cell are sealed with encapsulants 18 of, for example, epoxy thermosetting resin, acrylic UV curable resin, or liquid glass.

The absorption wavelengths of the light-absorbing members 15a to 15c are different from each other. The more distant from the incident light the layer of the light-absorbing member is, the more easily the light-absorbing member absorbs light components having longer wavelengths. For example, an anthraquinone yellow dye is used as the light-absorbing member 15a, an anthraquinone magenta dye is used as the light-absorbing member 15b, and an anthraquinone cyan dye is used as the light-absorbing member 15c.

The voltage-regulating circuits 3a to 3c may be of a voltage step-up type, a voltage step-down type, or a voltage step-up/step-down type. A type exhibiting low power-consumption and high efficiency is preferable. The voltage-regulating circuits may be a known DC-DC converter.

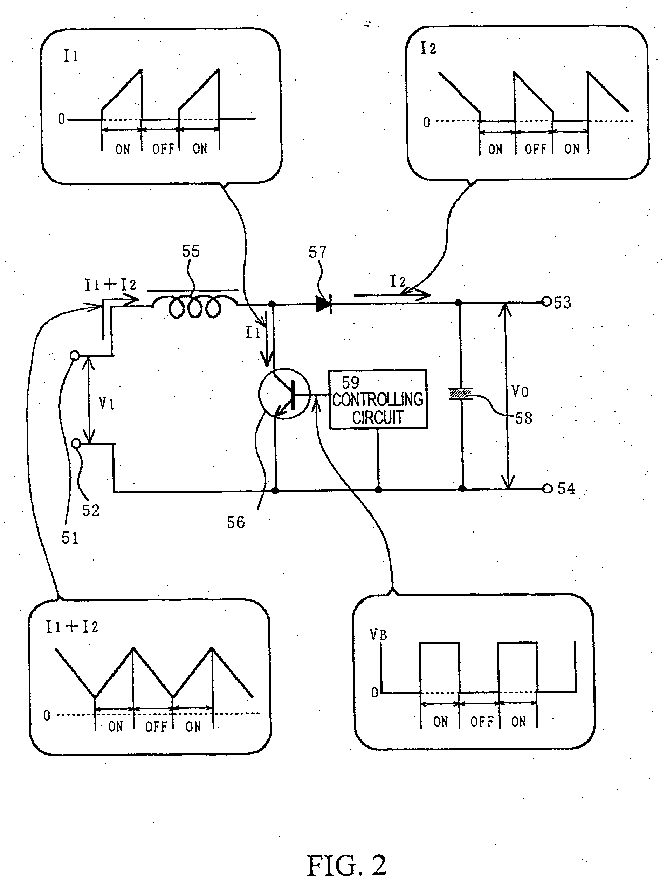

Fig. 2 shows a typical step-ug chopper-type constant-voltage circuit. An output voltage $V_I$ from the tandem photoelectric transducers is input to an input terminal 51 and a grounding terminal 52, and an output voltage $V_0$ that is stepped up to have a desired voltage value is output across an output terminal 53 and a grounding terminal 54.

In the left side of the circuit shown in Fig. 2, a coil 55 and a switching transistor 56 are interposed in series between the input terminal 51 and the grounding terminal 52. When the transistor 56 is turned on, a current $I_1$ flows and energy is stored in the coil 55.

In the outer part of the circuit shown in Fig. 2, the coil 55, a diode 57, and a capacitor 58 are interposed in series between the input terminal 51 and the grounding terminal 52. When the transistor 56 is turned off, a current $I_2$ that is stepped up by a back electromotive force of the coil 55 flows through the diode 57 to charge the capacitor 58. At this time, output energy from the tandem photoelectric transducers, which is stored in the coil 55, is output to an output side as energy charged in the capacitor 58.

To switch between the above two operations, control pulses having a rectangular waveform are applied to the base terminal of the switching transistor 56 from a controlling circuit 59.

The operation of the circuit shown in Fig. 2 in a steady state will now be described with emphasis on a voltage-adjusting function.

When positive pulses are applied to the base terminal of the transistor 56 and the transistor 56 is turned on, the current $I_1$ starts to flow through the coil 55 and the transistor 56 from the tandem photoelectric transducers. The output voltage $V_I$ can be assumed to be constant for at least several cycles. Thus, the current $I_1$ which flows through the coil 55 increases in proportion to elapsed time since the current $I_1$ starts to flow as represented by the following

equation:

$$dI_1/dt = V_I/L$$

where L is inductance of the coil 55.

Accordingly, when the period during which the transistor 56 is turned on is $t_{ON}$, $I_1$ at the beginning of this period is $I_{1S}$, and $I_1$ at the end of this period is $I_{1E}$, the following relationship is established:

$$I_{1E} = I_{1S} + (V_I/L)t_{ON}$$

When the base electric potential of the transistor 56 is decreased to the ground electric potential and the transistor 56 is turned off, a back electromotive force $V_L$ is induced between both ends of the coil 55, the diode 57 becomes conductive, and the current $I_2$ starts to pass through the capacitor 58 from the coil 55. When a voltage drop in the diode 57 is disregarded, the following relationships are established:

$$V_L = -(dI_2/dt)L$$

$$V_I + V_L = V_0$$

When a ripple voltage of the capacitor 58 can be disregarded and $V_0$ can be regarded as substantially constant, the current $I_2$ decreases in proportion to elapsed time since the current $I_2$ starts to flow as represented by the following equation:

$$dI_2/dt = -V_L/L = - (V_0 - V_I)/L$$

Accordingly, when the period during which the transistor 56 is turned off is $t_{OFF}$, $I_2$ at the beginning of this period is $I_{2S}$, and $I_2$ at the end of this period is $I_{2E}$, the following relationship is established:

$$I_{2E} = I_{2S} - (V_0 - V_I)t_{OFF}/L$$

Due to the nature of the coil 55, $I_{2E}$, e.g., the value of $I_2$ at the end of the period for which the transistor 56 is turned off is equal to the above-described $I_{1S}$, and $I_{2S}$, e.g., the value of $I_2$ at the beginning of the period for which the transistor 56 is turned off is equal to the above-described $I_{1E}$. Thus, the following relationships are established:

$$I_{1S} = I_{1E} - (V_0 - V_I)t_{OFF}/L$$
$$= (I_{1S} + V_I t_{ON}/L) - (V_0 - V_I)t_{OFF}/L$$

The equation $V_0 = (t_{ON} + t_{OFF})V_I/t_{OFF}$ is obtained by re-arranging the above equations. Thus, even when the input voltage $V_I$ changes, the output voltage $V_0$ can be kept constant by adjusting $t_{ON}/t_{OFF}$. More specifically, the controlling circuit 59 keeps the output voltage $V_0$ constant by monitoring the output voltage $V_0$ and by increasing or decreasing the duty ratio of pulses having a rectangular waveform according to deviation of the voltage from a predetermined value.

Not all of the tandem photoelectric transducers need be provided with the voltage-regulating circuits. One tandem photoelectric transducer may be designated as a reference transducer, and the other tandem photoelectric transducers may be provided with the voltage-regulating circuits.

In this embodiment, since the output currents from the tandem photoelectric transducers are output so as to match the parallel connection, the output currents from the transducers are not required to be the same as each other, unlike the series connection. Thus, a light-absorbing wavelength characteristic can be assigned to each tandem photoelectric transducer so that solar light is utilized at the maximum efficiency.

Even when the wavelength distribution of solar light deviates from the standard one in, for example, the summer and the winter seasons, and during the daytime, the morning, and the evening, a cell having a small output current does not restrict the output current of the overall power supply.

Moreover, since output voltages that are adjusted so as to be the same are output to the common terminals, problems such as flowback, which occurs when different output voltages are output in parallel, do not occur.

Second embodiment

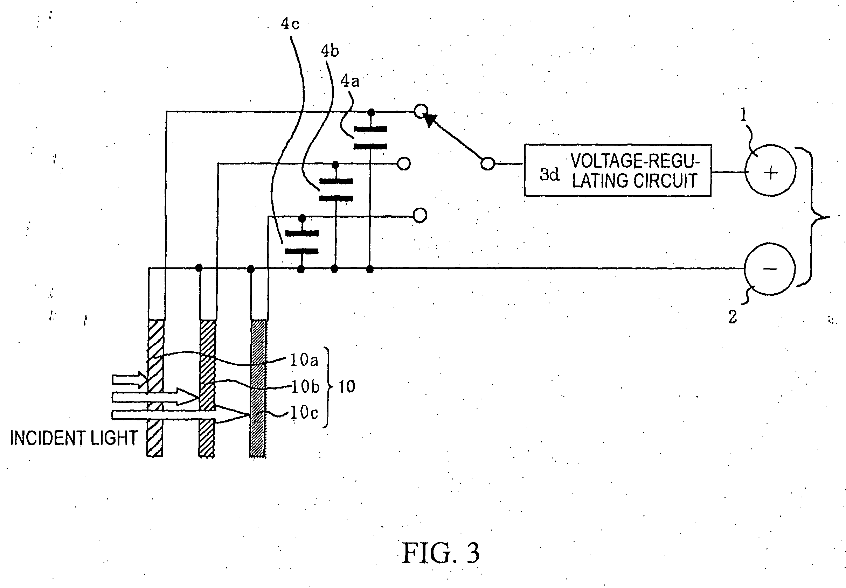

Fig. 3 is a schematic block diagram illustrating a power supply unit that stores energies generated by tandem photoelectric transducers 10a, 10b, and 10c, respectively, of a tandem wet solar cell 10 in capacitors 4a, 4b, and 4c as electric charge. The power supply unit then outputs the energies stored in the capacitors by time-sharing as currents at the same voltage across common output terminals 1 and 2 through a voltage-regulating circuit 3d that can connect to the capacitors.

This output technique using switched capacitors is a modification of the output technique in the first embodiment, Since outputs of the tandem photoelectric transducers 10a to 10c are not simultaneously connected to the common output terminal 1 after the voltages are adjusted, these outputs are not connected to each other in parallel in the strict sense. However, this output technique matches the parallel connection in that all the tandem photoelectric transducers 10a to 10c are substantially connected in parallel to the common output terminal 1. Thus, this output technique can be regarded as a modification of the parallel connection.

In addition, the difference between the first and second embodiments is as follows: In the first embodiment, as many voltage-regulating circuits 3a to 3c as the tandem photoelectric transducers are provided to constantly adjust the voltage of the output of each tandem photoelectric transducer, whereas, in the second embodiment, the functions of a plurality of voltage-regulating circuits are integrated into one voltage-regulating circuit 3d, which adjusts the voltage of the output of each tandem photoelectric transducer by time-sharing. The capacitors 4a, 4b, and 4c in the second embodiment are attached to temporarily store the outputs of the tandem photoelectric transducers 10a, 10b, and 10c, respectively, for a wait time required for processing.

Accordingly, a voltage-regulating circuit similar to that used in the first embodiment can used as the voltage-regulating circuit 3d on condition that the circuit provides a quick response because processing is required to be completed in a limited time.

A known multiplexer including a semiconductor switch is preferably used as a device for switching inputs of the voltage-regulating circuit 3d. However, applicable devices are not in principle limited to the multiplexer. A mechanical switch which switches contact points may be used.

Though the appearance of the second embodiment is different from that of the first embodiment, the second embodiment is identical to the first embodiment in that the outputs of the tandem photoelectric transducers are output to the common terminals so as to match the parallel connection. Thus, of course, similar advantages as in the first embodiment can be achieved.

Third embodiment

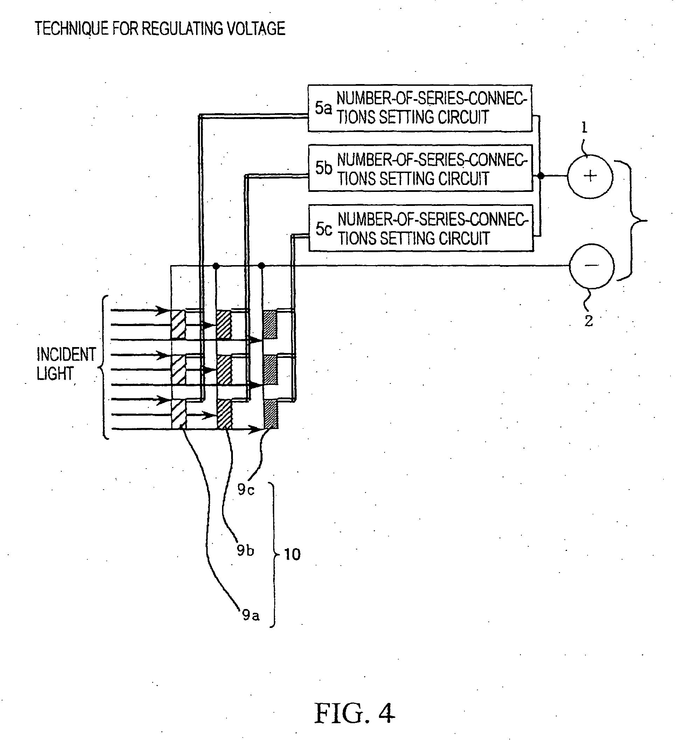

Fig. 4 is a schematic block diagram illustrating a power supply unit according to a third embodiment. The power supply unit includes tandem photoelectric transducers 10a to 10c in respective photoelectric layers, each transducer including many small cells having the same size. The power supply unit produces the same output voltages in all the layers only by setting connections among the small cells in each layer and outputs these voltages in parallel across the common output terminals 1 and 2. This embodiment does not need a voltage-regulating circuit such as a voltage step-up/step-down circuit, unlike the first and second embodiments.

Double connecting lines in Fig. 4 indicate that the small cells are connected in a matrix by both the series and the parallel connections. In practice, a number of rows, each including a predetermined number of small cells connected in series, are connected to each other in parallel. Hereinafter, the small cells connected in a matrix are called a cell matrix as a whole.

The output voltage of each matrix is the product of the electromotive force of each layer and the number of small cells connected in series in each layer. To equalize the output voltages of the cell matrixes in the layers, the number of small cells connected in series in a row and the total number of small cells that enables this series connection must be determined in consideration of the electromotive force of each layer.

The determination procedure will now be described. For example, a first layer has an electromotive force of 0.6 V, a second layer has an electromotive force of 0.4 V, and a third layer has an electromotive force of 0.3 V. The least common multiple of 6, 4, and 3 is 12. Thus, the common output voltage is fixed at 1.2 V or 1.2n V, where n is an integer.

To simplify the description, the output voltage is assumed to be 1.2 V. To,produce this output voltage, two small cells in the first layer, three small cells in the second layer, and four small cells in the third layer must be connected in series in each layer. Thus, each of the tandem photoelectric transducers 10a to 10c in each photoelectric layer must include twelve small cells in advance, twelve being the least common multiple of two, three, and four.

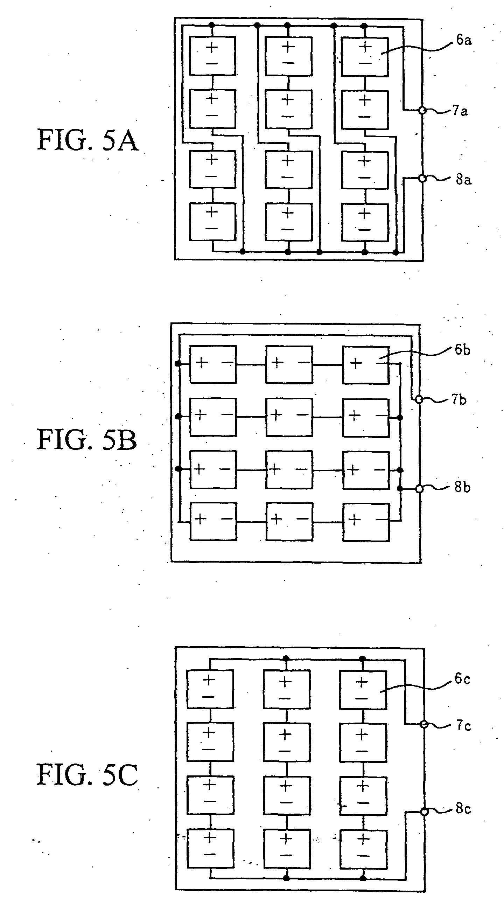

Fig. 5A is a schematic plan view illustrating the cell matrix, in the first photoelectric layer, including twelve small cells 6a obtained by dividing the tandem photoelectric transducer 10a in the first layer. Fig. 5B is a schematic plan view illustrating the cell matrix, in the second photoelectric layer, including twelve small cells 6b obtained by dividing the tandem photoelectric transducer 10b in the second layer. Fig. 5C is a schematic plan view illustrating the' cell matrix, in the third photoelectric layer, including twelve small cells 6c obtained by dividing the tandem photoelectric transducer 10c in the third layer. Each cell matrix is wired so as to produce the same output voltage of 1.2 V. Outputs of the cell matrixes in the above layers are, respectively, output from paired output terminals 7a and 8a, 7b and 8b, and 7c and 8c.

There are two techniques for setting the number of cells connected in series in a row. In a first simple technique, series and parallel wiring patterns are predetermined, as described above, and these wiring patterns are used without modification. In a second technique, the number of small cells connected in series in a row is changed by changing series and parallel wiring patterns of the small cells so that the cell matrixes maintain the same output voltage even when the electromotive force of each layer changes due to, for example, a change in the wavelength distribution of incident light or aging of the cells.

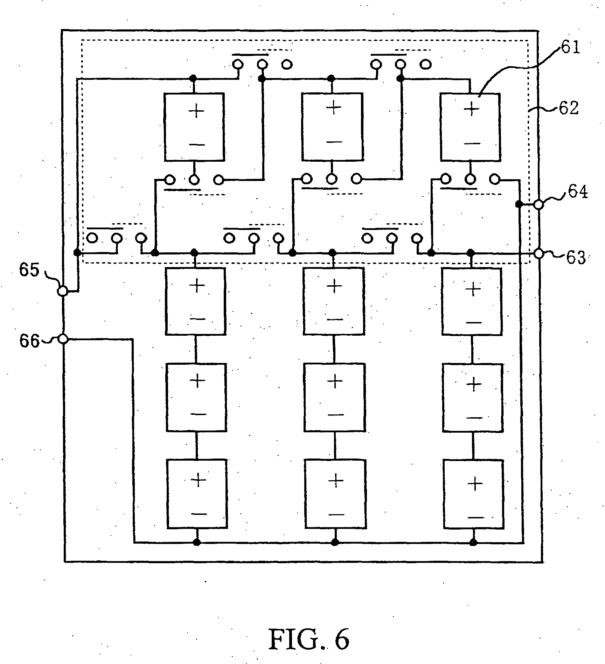

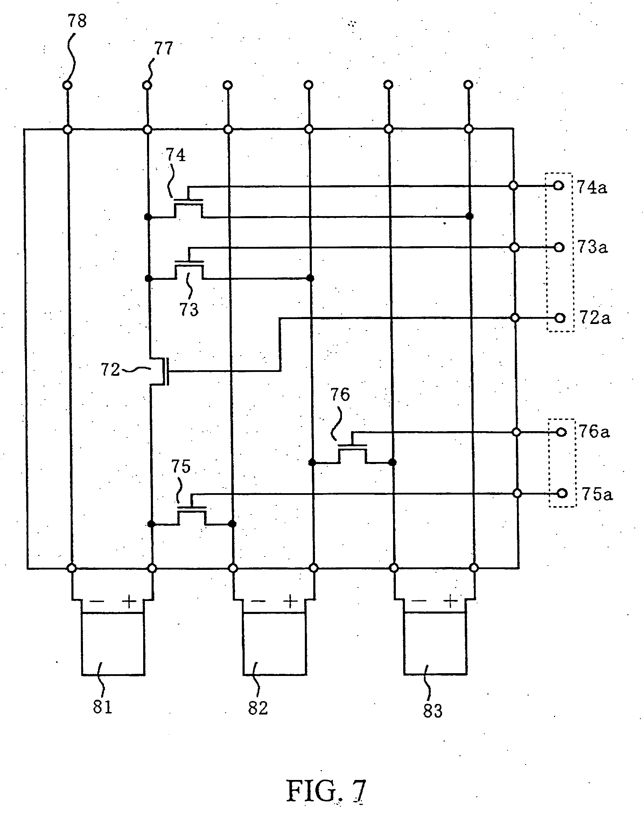

Figs. 6 and 7 illustrate examples of the second technique. Fig. 6 illustrates a circuit that changes the number of cells connected in series in a row with a sliding switch having multiple contact points. When a sliding switch 62 is located at a position represented by the dotted lines, each output produced by three small cells 61 connected in series is output across output terminals 63 and 64. When the sliding switch is located at a position represented by the solid lines, each output produced by four small cells connected in series is output across output terminals 65 and 66.

Fig. 7 illustrates a typical circuit that changes the number of cells connected in series in a row using a gate circuit including transistors. The on-off operations of transistors 72 to 76 are respectively controlled by applying control signals to control terminals 72a to 76a.

When only the transistor 72 is conductive, the electromotive force of a small cell 81 is output across output terminals 77 and 78. When only the transistors 73 and 75 are conductive, the voltage produced by a series connection of the small cell 81 and a small cell 82 is output across the output terminals 77 and 78. When the transistors 74, 75, and 76 are conductive and the transistors 72 and 73 are cut off, the voltage produced by a series connection of the small-cells 81 and 82 and a small cell 83 is output across the output terminals 77 and 78.

The techniques used in the third embodiment are different from those used in the first and the second embodiments, but the third embodiment is the same as the first and the second embodiments in that the outputs are output to the common terminals so as to match the parallel connection. Thus, of course, the same advantages as described above can be achieved.

The present invention is described as above according to the embodiments. The present invention is not limited to these embodiments, but can be suitably modified without departing from the spirit of the invention.

For example, the first or the second embodiments and the third embodiment can be used in combination. That is, outputs adjusted in advance to have a voltage value near a target output voltage value by a plurality of small cells connected in series in a row using the technique of the third embodiment are used as inputs to voltage-regulating circuits according to the first and the second embodiments.

When these embodiments are used in combination, voltages near the target output voltage value are input to the voltage-regulating circuits. Thus, it is advantageous, from the viewpoints of the first and the second embodiments, in that the load on the voltage-regulating circuits is lightened and energy loss occurring in adjusting the voltages is reduced. The voltages are eventually adjusted to the same voltage value by the voltage-regulating circuits. Thus, it is advantageous, from the viewpoint of the third embodiment, in that the output voltages of the cell matrixes in the layers do not need to have strictly the same voltage value, thereby enabling a high degree of freedom in selecting the number of cells connected in series in a row and the total number of small cells.

The present invention can be efficiently applied to not only power supply units including solar cells but power supply units including other cells, such as chemical cells, for example, emergency power supply units including lead-acid cells, and power generating units including fuel cells, for the reasons described below.

In all cells, the electromotive force and output current per cell are restricted to be relatively small. Thus, many cells connected in series or in parallel are practically used in many cases. Each cell has a different electromotive force and output current, depending on differences in, e.g., manufacturing conditions, aging, and operating conditions, such as the state of charging and the rate of supply of active material to the cells. In general, power supply units including cells and power supply units including solar cells share these common problems..

Industrial Applicability

According to the present invention, after the outputs of a plurality of cells, having different output voltages and output currents, are adjusted to have the same output voltage value, the outputs are then output to common terminals so as to match the parallel connection.

Since the outputs of the plurality of cells are output so as to match the parallel connection, a cell outputting a low current does not increase the internal resistance in the overall power supply unit to restrict the output currents, unlike the series connection.

Moreover, since the output voltages, which are adjusted so as to be the same, are output to the common terminals, problems such as flowback, which occurs when different output voltages are output in parallel, do not occur.

In the case where the present invention is applied to a tandem solar cell, even when the wavelength distribution of solar light deviates from the standard one in, for example, the summer and the winter seasons, and during the daytime, the morning, and the evening, a cell outputting a low current does not restrict the output currents of the overall power supply unit and does not decease the photoelectric energy conversion efficiency.

Moreover, since output currents from stacked tandem photoelectric transducers do not need to be equal to each other, a light-absorbing wavelength characteristic can be assigned to each tandem photoelectric transducer so that solar light is utilized at the maximum efficiency.

## Claims

1. A power supply unit comprising a plurality of cells having different output characteristics disposed in parallel, wherein outputs of the plurality of cells are adjusted to have the same voltage and the outputs are output from common terminals.

2. The power supply unit according to claim 1, wherein the plurality of cells are connected in parallel to each other through respective voltage-regulating circuits.

3. The power supply unit according to claim 1, wherein the outputs from the plurality of cells are stored in respective capacitors, and the stored charge in each of the capacitors is output, by time-sharing, as the same voltage through a single voltage-regulating circuit that can connect to each of the capacitors.

4. The power supply unit according to claim 1, wherein each of the plurality of cells comprises units and the number of the units connected to each other in series in each of rows and the number of the rows connected to each other in parallel are adjustable.

5. The power supply unit according to claim 1, wherein the plurality of cells are photoelectric transducers.

6. The power supply unit according to claim 5, wherein the plurality of cells are photoelectric transducers that are stacked along the transmission direction of light and that have different optical absorption properties.

FIG. 1

FIG. 2

FIG. 3

TECHNIQUE FOR REGULATING VOLTAGE

5a NUMBER-OF-SERIES-CONNEC-TIONS SETTING CIRCUIT

5b NUMBER-OF-SERIES-CONNEC-TIONS SETTING CIRCUIT

5c NUMBER-OF-SERIES-CONNEC-TIONS SETTING CIRCUIT

1

$+$

$-$

2

INCIDENT LIGHT

9c

9b

9a

10

# FIG. 4

FIG. 5A

6a

7a

8a

FIG. 5B

6b

7b

8b

FIG. 5C

6c

7c

8c

FIG. 6

FIG. 7

FIG. 8

## FIG. 9A

INCIDENT LIGHT

11

12
13
14
15
16
13
17

18    19    18

## FIG. 9B

ENERGY

WAVELENGTH DISTRIBUTION OF SOLAR LIGHT

UNUSED PART MORE THAN EXCITATION ENERGY (II)

USABLE ENERGY

UNUSED PART LESS THAN EXCITATION ENERGY (I)

$\lambda \; x$

WAVELENGTH

# FIG. 10A

INCIDENT LIGHT

11   12a

13a
14a  15a  10a
16a
13a
17a
20
13b
12b  10b
14b  15b
16b
13b
17b
20
13c
14c  12c
15c  10c
16c
13c
17c

19   18

# FIG. 10B

(b)

ENERGY

WAVELENGTH DISTRIBUTION OF SOLAR LIGHT

USABLE ENERGY

$\lambda x$ (a)     $\lambda x$ (c)

## INTERNATIONAL SEARCH REPORT

| | International application No. |
|---|---|
| | PCT/JP03/05939 |

A. CLASSIFICATION OF SUBJECT MATTER
    Int.Cl⁷  H01L31/04

According to International Patent Classification (IPC) or to both national classification and IPC

B. FIELDS SEARCHED

Minimum documentation searched (classification system followed by classification symbols)
    Int.Cl⁷  H01L31/04

Documentation searched other than minimum documentation to the extent that such documents are included in the fields searched

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | US 6150605 A  (SHARP KABUSHIKI KAISHA), 21 November, 2000 (21.11.00), & JP 2000-100483 A | 1-6 |
| A | JP 11-273753 A  (Sekisui Chemical Co., Ltd.), 08 October, 1999 (08.10.99), (Family: none) | 1-6 |
| A | JP 2000-90989 A (Toshiba Corp.), 31 March, 2000 (31.03.00), (Family: none) | 1-6 |
| A | JP 2001-177120 A  (Toyota Motor Corp.), 29 June, 2001 (29.06.01), (Family: none) | 1-6 |

☐ Further documents are listed in the continuation of Box C.    ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 03 October, 2003 (03.10.03) | 14 October, 2003 (14.10.03) |

| Name and mailing address of the ISA/ | Authorized officer |
|---|---|
| Japanese Patent Office | |
| Facsimile No. | Telephone No. |

Form PCT/ISA/210 (second sheet) (July 1998)